# EUROPÄISCHE PATENTANMELDUNG

(11) **EP 1 788 042 A2**
(43) Veröffentlichungstag der Anmeldung: **23.05.2007**
(21) Anmeldenummer: 06400029.2
(22) Anmeldetag: 27.09.2006
(51) Int. Cl.: C09D 5/16

(54) **Antifouling-Beschichtungszusammensetzung für Wasserfahrzeuge**

(30) Priorität: 29.09.2005 DE 102005047586
(71) Anmelder: Keddo, Mustafa, 50354 Hürth-Gleuel (DE)
(72) Erfinder: Keddo, Mustafa, 50354 Hürth-Gleuel (DE)

(57) **Zusammenfassung**

Beschichtungszusammensetzung, wenigstens aufweisend:
25 bis 60 Gew.%, einer Lösung bestehend aus wenigstens einem Alkohol mit 1 bis 5 Kohlenstoffatomen sowie einem Paraffin oder Isoparaffin mit 5 bis 15 Kohlenstoffatomen;
2 bis 10 Gew.% eines Duroplasten, bevorzugt eines Epoxidharzes; sowie
5 bis 70 Gew.%, wenigstens einer siliziumorganischen Verbindung der allgemeinen Formel 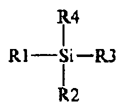 wobei R1, R2 und R3 gleiche oder verschiedene Alkyl- oder Alkoxygruppen mit 1 bis 5 Kohlenstoffatomen sind, und R4 eine substituierte oder unsubstituierte Aryl-, Amin, Epoxigruppe, eine Perfluorgruppe mit bis zu 13 Fluoratomen, eine Ethergruppe mit 1 bis 5 Kohlenstoffatomen oder eine substituierte oder unsubstituierte Alkylgruppe mit 3 bis 9 Kohlenstoffatomen ist.
Verfahren zur Beschichtung von mit Wasser in Kontakt stehenden Oberflächen, insbesondere von Oberflächen von Wasserfahrzeugen.

## Beschreibung

Die vorliegende Erfindung betrifft eine Beschichtungszusammensetzung, insbesondere eine Antifouling-Beschichtungszusammensetzung für Wasserfahrzeuge oder sonstige mit Süß- oder Salzwasser in Kontakt tretende Oberflächen, welche frei von üblichen, umweltbelastenden Stoffen wie Organozinnverbindungen, Bioziden oder Kupfer ist.

Mit Süß- oder Salzwasser in Kontakt tretende Wasserfahrzeugoberflächen sind anfällig gegenüber Organismen, welche sich an den Oberflächen anlagern. Solche Oberflächen können beispielsweise die Außenwände von Schiffen, Booten, Yachten, Segeln, Tankern, Offshore-Industrieanlagen wie Bohrplattformen oder Windenergieanlagen oder auch Bauwerke wie Steganlagen oder Brückenpfeiler sein. Darüber hinaus unterliegen auch dem Regen ausgesetzte Oberflächen von Wohnwagen, -mobilen sowie Gummileisten oder auch Vordächer einer regelmäßigen Verunreinigung der durch den Regen mitgeführten Schmutzstoffe. Insbesondere die in den Süß- und Salzgewässern lebenden Organismen und Mikroorganismen wie beispielsweise Seepocken, Grün- und Braunalgen, Krebse, Muscheln, Insektenlarven, Kiesel- und Polstergrünalgen, Dreikant-Miesmuscheln, Süßwassermuscheln oder Austern lagern sich an den mit den Gewässern in Kontakt tretenden Oberflächen an und führen dort zu Ablagerungen bzw. Bewuchs, insbesondere zu Kalkablagerungen in Form fester Krusten.

Dieser Bewuchs der mit den Gewässern in Kontakt tretenden Oberflächen kann zu einer Schädigung oder Beeinträchtigung dieser Oberflächen führen. Im Falle von Schiffsrümpfen führen beispielsweise solche Bewüchse oder Ablagerungen zu einer deutlichen Erhöhung des Reibungswiderstandes und damit einhergehend zu einer Reduzierung der Geschwindigkeit und einer Erhöhung des Treibstoffverbrauchs.

Darüber hinaus können die Ablagerungen die Oberflächen in Abhängigkeit der Materialien, aus denen sie bestehen, nachhaltig schädigen, beispielsweise durch Korrosion bei metallischen Oberflächen oder Osmose bei Kunststoffoberflächen wie glasfaserverstärkte Kunststoffe (GfK).

Im Fall von Bauwerken oder Offshore-Industrieanlagen, welche mit Gewässern in direktem Kontakt stehen, können solche Ablagerungen neben den bereits zuvorgenannten Schädigungen der Oberflächen zu erhöhten Widerständen gegenüber Wellen oder Strömung führen, wodurch nur schwer vorhersehbare zusätzliche Belastungen der tragenden Strukturen auftreten können. Darüber erschweren oder verhindern sogar solche Ablagerungen und Bewüchse die Überprüfung der Unterwasserstrukturen solcher Anlagen und Gebäude auf Schädigungen wie Risse oder Korrosion oder sonstige Defekte.

Nach dem Stand der Technik war es bisher üblich, zur Verhinderung solcher Ablagerungen oder Bewüchse biozid wirkende Substanzen den Beschichtungsmitteln zu zusetzen. So ist es beispielsweise üblich, Biozide wie Tetrabutylzinnverbindungen (TBT) oder Kupfer(I,II)-oxid den Beschichtungsmitteln zu zusetzen. Solche fäulnisverhindernden Zusätze sind zwar effektiv, schädigen jedoch nachhaltig die Umwelt und sind auch für die mit diesen Substanzen in Kontakt geratenen Menschen gesundheitsgefährdend. Weitere vielfach im Stand der Technik, wie beispielsweise dem europäischen Patent EP 1 144 518 B1 verwendete Biozide sind Irgarol 1051, Isotiazoline, Triazine, Atrazine oder Simazine. All diese Substanzen sind hochgradig umwelt- und gesundheitsgefährdend, warum deren Verwendung in den zur Rede stehenden Beschichtungszusammensetzungen äußerst bedenklich ist.

Weitere Beispiele für Klassen in diesem Bereich eingesetzter Biozide finden sich in der USA 5,116,407 und der JP-A-1-103672. Hier wird die Verwendung von Aminen mit einer aliphatischen oder zykloaliphatischen Kohlenwasserstoffgruppe mit 12 bis 10 Kohlenstoffatomen offenbart, welche im Allgemeinen toxisch für Wasserorganismen sind. Auch diese Verbindungen sind aufgrund ihres hohen Biozidpotentials in der Anwendung bedenklich.

Ein weiterer Ansatz zur Verhinderung von Ablagerungen und Bewüchsen sind selbstpolierende Beschichtungen wie sie beispielsweise im europäischen Patent EP 0 289 481 offenbart werden. Auch die hier offenbarten Unterwasseranstriche sind nicht frei von für Meeresorganismen toxische Substanzen wie beispielsweise Kupfer(I)-oxid oder Kupfer(II)-oxid. Gleiches gilt für das europäische Patent EP 0 526 441 B1. Die deutsche Patentanmeldung DE 36 23 732 offenbart eine Antifouling-Farbe auf Basis von polymerisierbaren ungesättigten Polysiloxanen.

Das europäische Patent EP 0 931 818 B1 offenbart wiederum ein Kupfer(I)-oxid haltiges Unterwasser-Antifoulingmittel, was darüber hinaus ein Hexacyanoferrat aufweist.

Das europäische Patent EP 1 042 414 offenbart bewuchsverhindernde Überzüge auf Basis von Acrylsäure- oder Metacrylsäureestern, welche jedoch wiederum Kupfer oder andere umweltbedenkliche Biozide aufweist.

Das europäische Patent EP 0 617 725 B1 offenbart ein Verfahren zur Hemmung von Bewuchs, bei welchem eine Beschichtungszusammensetzung auf die vor Bewuchs zu schützenden Substrate aufgebracht wird, welche härtbare Organohydrogenpolysiloxane und Polymere mit Siloxaneinheiten im Polymergerüst aufweist.

Unter Berücksichtigung des Standes der Technik ist es die Aufgabe der vorliegenden Erfindung, eine Beschichtungszusammensetzung, insbesondere einer Antifouling-Beschichtungszusammensetzung für Wasserfahrzeuge zur Verfügung zu stellen, welche frei von allgemein als umweltgefährdend eingeschätzten biozidwirkenden Substanzen und einfach applizierbar ist und dabei eine bewuchsverhindernde Oberfläche ausbildet, welche hinsichtlich ihrer Bewuchshemmung äquivalent mit klassischen Antifoulings ist.

Gelöst wird diese Aufgabe durch eine Beschichtungszusammensetzung insbesondere Antifouling-Beschichtungszusammensetzung für Wasserfahrzeuge, welche wenigstens aufweist:

25 bis 60 Gewichtsprozent, bevorzugt 35 bis 45 Gewichtsprozent einer Lösung, bestehend aus wenigstens einem Alkohol mit 1 bis 5 Kohlenstoffatomen sowie einem Paraffin oder Isoparaffin mit 5 bis 15 Kohlenstoffatomen;

2 bis 10 Gewichtsprozent eines Duroplasten, bevorzugt eines Epoxidharzes; sowie

5 bis 70 Gewichtsprozent, bevorzugt 30 bis 70 Gewichtsprozent, noch bevorzugter 50 bis 70 Gewichtsprozent wenigstens einer siliziumorganischen Verbindung (Alkoxysilan) der allgemeinen Formel : 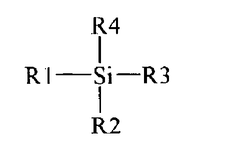 wobei R1, R2 und R3 gleiche oder verschiedene Alkyl- oder Alkoxygruppen mit 1 bis 5 Kohlenstoffatomen sind, und R4 eine substituierte oder unsubstituierte Aryl-, Amin-, Epoxigruppe, eine Perfluorgruppe mit bis zu 13 Fluoratomen, eine Ethergruppe mit 1 bis 5 Kohlenstoffatomen oder eine substituierte oder unsubstituierte Alkylgruppe mit 3 bis 9 Kohlenstoffatomen ist. Bevorzugt weist die siliziumorganische Verbindung die allgemeine Formel 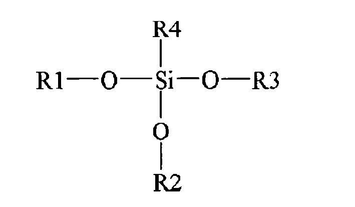 auf, wobei wobei R1, R2 und R3 gleiche oder verschiedene Alkylgruppen mit 1 bis 5 Kohlenstoffatomen sind, und R4 eine substituierte oder unsubstituierte Aryl-, Amin-, Epoxigruppe, eine Perfluorgruppe mit bis zu 13 Fluoratomen, eine Ethergruppe mit 1 bis 5 Kohlenstoffatomen oder eine substituierte oder unsubstituierte Alkylgruppe mit 3 bis 9 Kohlenstoffatomen ist.

Überraschenderweise wurde im Rahmen der vorliegenden Erfindung herausgefunden, dass unter Anwendung des Sol-Gel-Verfahrens hergestellte Beschichtungen auf Basis von Epoxidharz und siliziumorganischen Verbindungen der zuvor genannten allgemeinen Formel hervorragende Eigenschaften als Bewuchsschutz von Süß- und Salzwasser ausgesetzte Oberflächen aufweisen.

Die Synthese dieser auch als Nanokomposite bezeichneten Werkstoffe beruht chemisch auf der Hydrolyse und Kondensation verschiedener Alkoxide in Anwesenheit von Katalysatoren, wie beispielsweise Säuren, Basen oder auch Wasser oder Kohlendioxid. Die Ausgangsverbindungen werden in Alkoholen gelöst und anschließend durch entsprechende Hydrolyse- und Kondensationsreaktionen in ein Sol überführt. Durch Zugabe organischer Additive wird aus dem so erhaltenen Sol ein Gel, welches je nach Art der Trocknung, also dem Entzug der Lösemittel, als Xerogel oder Aerogel bezeichnet wird.

Bei Xerogelen handelt es sich um poröse Feststoffe mit einer netzwerkartigen Struktur, die aus der Trocknung eines Gels hervorgegangen ist. Ein Beispiel für ein Xerogel ist Silicagel, welches als Trockenmittel eingesetzt wird. In Abgrenzung zu den Aerogelen weisen Xerogele während der Trocknung erhebliche Strukturänderungen auf, die mit Schrumpfungsprozessen und einer Abnahme der Porösität verbunden sind. Xerogele weisen in der Regel eine Porösität von ca. 50 % auf.

Durch geeignete Wahl der Trocknung können Gele jedoch auch unter Erhalt des porösen Netzwerkes von den Lösemitteln befreit werden. Die hierbei entstehenden Aerogele weisen eine Porösität von etwa 90 % auf und bilden somit Feststoffe mit extrem niedriger Dichte und sehr kleinem Brechungsindex. Beim Entzug der Lösemittel tritt hierbei keine oder nur eine sehr geringe Schrumpfung auf und die Netzwerkstruktur bleibt erhalten.

Als die den Gelen vorausgehende Sole werden koloiddisperse Systeme bezeichnet, bei denen eine feste Phase und eine flüssige Phase in feinster Verteilung dispergiert vorliegen. Die Feststoffphase weist in der Regel Partikeldurchmesser < 1000 Angström auf. Die Sol-Teilchen sind thermodynamisch nicht stabil und werden kinetisch durch Hydrathüllen sowie durch elektrostatische und sterische Wechselwirkungen stabilisiert.

Durch geeignete Katalysatoren wie beispielsweise Säuren, Basen oder auch Wasser und Kohlendioxid erfolgt eine Kondensation und der Übergang des Sols in die sogenannte Gelstruktur. Hierbei werden in der erfindungsgemäßen Beschichtungs-zusammensetzung Si-O-Si-Bindungen ausgebildet und es entsteht ein drei-dimensionales Oxidnetzwerk.

Allgemein verlaufen die Reaktionsschritte der Hydrolyse und Kondensation gemäß der nachfolgenden Reaktionsgleichungen.

### Hydrolyse:

Si(OR)₄ + n H₂O → Si(OR)₄₋ₙ(OH)ₙ + n R OH

### Kondensation:

(RO)₃ Si-OR + HO-Si(OR)₃ → (RO)₃ Si-O-Si(OR)₃ + ROH

(RO)₃ Si-OH + HO-Si(OR)₃ → (RO)₃-Si-O-Si(OR)₃ + H₂O

Die sich hierbei ausbildenden Partikel wachsen durch weitere Kondensationsreaktionen bis sie sich gegenseitig berühren. Hierbei bildet sich letztendlich eine feste Phase aus, die von einer flüssigen Phase durchdrungen ist. Ein solcher Zustand wird als Gel bezeichnet. Gele sind formbeständige, leicht deformierbare, an Flüssigkeit reiche disperse Systeme, die aus einem festen, unregelmäßigen dreidimensionalen Netzwerk bestehen, in welches Flüssigkeit eingelagert ist. Die dreidimensionalen Netzwerkstrukturen der Gele können feste oder flüssige Substrate eingelagert werden, wodurch sich die chemischen oder physikalischen Eigenschaften der Gele beeinflussen lassen. So führt beispielsweise der Zusatz von Polytetrafluorethylen (PTFE) zu einer sehr glatten Oberfläche. Die Einlagerung von fein dispers verteiltem Nano-Zinkoxid mit einem Durchmesser kleiner 100 Nanometer lässt auf Basis solcher Gele hergestellte Oberflächen gegenüber dem Bewuchsbefall bestimmter Organismen unempfindlicher werden. Gleiches kann durch die Einlagerung von Peroxiden wie beispielsweise Calciumperoxid erreicht werden, welches Sauerstoff abspaltet und auf diese natürliche Weise eine bakteriozide Wirkung entfaltet. Weiterhin können Wachse in die Gele eingelagert werden, was wiederum zu glatten Oberflächen führt. Ähnliche Effekte können durch die Einlagerung von Perfluorverbindungen oder Silikonölen in die Gelstruktur erreicht werden.

Die durch Trocknung aus solchen Gelen hergestellten erfindungsgemäßen Beschichtungen sind allgemein kratz- und abriebbeständig sowie unlöslich in organischen Lösemitteln. In Abhängigkeit der in die Gele eingelagerten Additive können die Oberflächen hydrophob oder hydrophil gestaltet werden. Hierdurch sind die erfindungsgemäßen Beschichtungen auch für unterschiedliche Oberflächenmaterialien geeignet. So lassen sich je nach eingelagertem Additiv kohlenstofffaserverstärkte Kunststoffe, Faser-Kunststoff-Verbundwerkstoffe, wie zum Beispiel Polyester, Epoxidharze, Polyamide oder glasfaserverstärkte Kunststoffe (GfK), oder auch Holz- oder Metalloberflächen anwenden.

Im Unterschied zu den aus dem Stand der Technik bekannten Antifouling-Beschichtungen bilden die erfindungsgemäßen Beschichtungszusammensetzungen auf den zu beschichtenden Substraten, insbesondere auf Metall und GfK-Substraten kovalente Bindungen mit der Oberfläche aus. Die nach dem Stand der Technik bekannten Beschichtungszusammensetzungen bilden lediglich aufgrund von Adhäsionskräften mit den Oberflächen verbundene Filme aus. Insbesondere durch die Ausbildung der kovalenten Bindungen, welche gemäß der nachfolgenden Formel durch Silankondensation entstehen, werden bisher nach dem Stand der Technik nicht bekannte, hohe Adhäsionswerte für die Beschichtungen erzielt.

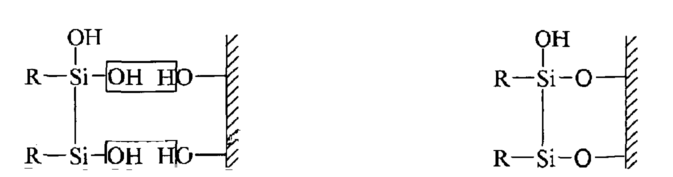

Vorteilhafterweise weist die erfindungsgemäße Beschichtungszusammensetzung neben den zuvor genannten Bestandteilen eine Dicarbonsäureanhydridverbindung der allgemeinen Formel 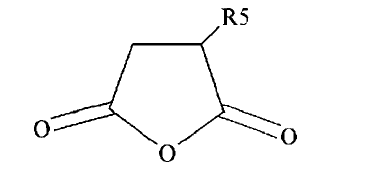 auf, wobei R5 eine Alkylgruppe mit 4 bis 12 Kohlenstoffatomen, bervorzugt mit 6 bis 9 Kohlenstoffatomen oder eine Gruppe der allgemeinen Formel 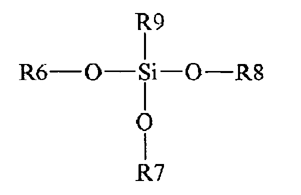 ist, wobei R6, R7, R8 und R9 gleiche oder verschiedene Alkylgruppen mit 1 bis 5 Kohlenstoffatomen sind. Besonders bevorzugt weist die Beschichtungszusammensetzung ein Propylbernsteinsäureanhydridtriethoxysilan auf.

Die erfindungsgemäße Beschichtungszusammensetzung weist die zuvor genannte Verbindung in einer Konzentration zwischen 5 und 20 Gewichtsprozent, bevorzugt zwischen 5 und 15 Gewichtsprozent auf.

Zur Einstellung der Oberflächeneigenschaften kann die erfindungsgemäße Beschichtungszusammensetzung Nanozinkoxid aufweisen. Insbesondere vorteilhaft hat sich erwiesen, wenn das Nanozinkoxid eine mittlere Korngröße < 30-100 nm aufweist. Das Nanozinkoxid kann erfindungsgemäß in der Beschichtungszusammensetzung mit 5 bis 20 Gewichtsprozent, bevorzugt mit 5 bis 15 Gewichtsprozent enthalten sein.

Zur Glättung der aus der erfindungsgemäßen Beschichtungszusammensetzung hergestellten Beschichtungsoberflächen kann die Beschichtungszusammensetzung 5 bis 20 Gewichtsprozent, bevorzugt 5 bis 15 Gewichtsprozent Polytetrafluorethylen enthalten.

Um die aus der erfindungsgemäßen Beschichtungszusammensetzung hergestellte Beschichtungsoberfläche desinfizierend zu gestalten, ist es erfindungsgemäß vorgesehen, der Beschichtungszusammensetzung 5 bis 20 Gewichtsprozent, bevorzugt 5 bis 15 Gewichtsprozent eines Peroxides, vorzugsweise Calciumperoxid zuzusetzen.

In einer weiteren Ausgestaltung der erfindungsgemäßen Beschichtungszusammensetzung kann diese eine Mischung eines Montanwachses mit einem 5 bis 15 Kohlenstoffatome aufweisenden Paraffin oder Isoparaffin aufweisen. Hierbei hat sich insbesondere eine Mischung eines Montanwachses mit einem Isoparaffin im Verhältnis von 2:1 bis 1:2 als geeignet erwiesen. Die erfindungsgemäße Beschichtungszusammensetzung kann die Montanwachsmischung in einer Konzentration von 10 bis 30 Gewichtsprozent, bevorzugt 10 bis 25 Gewichtsprozent enthalten.

In einer weiteren Ausgestaltung der erfindungsgemäßen Beschichtungszusammensetzung weist diese ein reaktives aminofunktionelles Polydimethylsiloxan (Silikonöl) auf. Vorteilhafter Weise weist die Beschichtungszusammensetzung das reaktive aminofunktionelle Polydimethylsiloxan (Silikonöl) in einer Konzentration zwischen 2 bis 10 Gewichtsprozent, bevorzugt 2 bis 7 Gewichtsprozent auf.

Weiterhin liegt im Rahmen der Erfindung ein Verfahren zur Beschichtung von Oberflächen von Wasserfahrzeugen, welches die Verfahrensschritte aufweist:

Aufbringen einer Beschichtungszusammensetzung auf die zu beschichtende Oberfläche, wenigstens aufweisend:

25 bis 60 Gewichtsprozent, bevorzugt 35 bis 45 Gewichtsprozent einer Lösung bestehend aus wenigstens einem Alkohol mit 1 bis 4 Kohlenstoffatomen sowie einem Paraffin oder Isoparaffin mit 5 bis 15 Kohlenstoffatomen;

2 bis 10 Gewichtsprozent eines Duroplasten, bevorzugt eines Epoxidharzes; sowie

5 bis 70 Gewichtsprozent, bevorzugt 30 bis 70 Gewichtsprozent, noch bevorzugter 50 bis 70 Gewichtsprozent wenigstens einer siliziumorganischen Verbindung der allgemeinen Formel 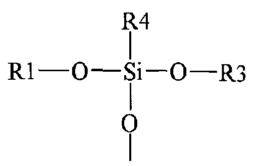 wobei R1, R2 und R3 gleiche oder verschiedene Alkylgruppen mit 1 bis 5 Kohlenstoffatomen sind, und R4 eine substituierte oder unsubstituierte Arylgruppe, eine Ethergruppe mit 1 bis 5 Kohlenstoffatomen oder eine substituierte oder unsubstituierte Alkylgruppe mit 3 bis 9 Kohlenstoffatomen ist und

Trocknen der aufgebrachten Beschichtungszusammensetzung.

In einer Ausgestaltung des im Rahmen der Erfindung liegenden Verfahrens kann vor einer endgültigen Trocknung der aufgebrachten Beschichtung auf diese ein Polymerpulver mit einer spezifischen Oberfläche > 300 m²/g aufgebracht werden. Vorteilhafter Weise handelt es sich bei dem Polymerpulver um ein Polyurethanpulver. Insbesondere kann dieses Polymerpulver mittels elektrostatischer Pulverbeschichtungsverfahren auf die noch nicht endgültig abgetrocknete Oberfläche aufgebracht werden.

Hierdurch wird die Oberfläche in einer derart rauen, mikroporösen Gerüststruktur gestaltet, dass Anhaftungen und allgemeiner Bewuchs vermieden werden. Es wird davon ausgegangen, dass nur Moleküle in den Poren haften, welche einen kleineren kinetischen Durchmesser besitzen als die Porenöffnungen der Polymerpulver,

Allgemein lässt sich das im Rahmen der Erfindung liegende Verfahren und das anschließende Aufbringen des Polymerpulvers mit sämtlichen im Rahmen der Verbindung liegenden Beschichtungszusammensetzungen kombinieren, was zu einer entsprechenden Gestaltbarkeit der Oberflächeneigenschaften führt.

Neben den bereits genannten Zusätzen können die erfindungsgemäßen Beschichtungszusammensetzungen sowie die im erfindungsgemäßen Verfahren eingesetzten Beschichtungszusammensetzungen weitere Additive enthalten. Beispielsweise können dies langkettige Epoxi- oder Phenylsilane sein, welche die Sprödigkeit der Beschichtungen beeinflussen. Auch liegt es im Rahmen der Erfindung den Beschichtungszusammensetzungen zur Hydrophobierung der Oberfläche oligomere Fluoralkyl- bzw. Perfluorsilane wie Tridecafluoroctyltriethoxysilan zuzusetzen. Ebenfalls im Rahmen der Erfindung liegt der Zusatz von beispielsweise Glycidoxyalkoxysilanen oder Aminoalkoxysilanen zur weiteren Erhöhung der Haftfestigkeit der aus den erfindungsgemäßen Beschichtungszusammensetzungen oder mit dem erfindungsgemäßen Verfahren hergestellten Beschichtungen.

Im Gegensatz zu den bekannten Beschichtungszusammensetzungen bilden die erfindungsgemäßen Beschichtungszusammensetzungen in den Beschichtungen keine langkettigen Polymere sondern kleinere Moleküleinheiten im Bereich unter 100 nm aus. Hierdurch können die Beschichtungen in die Oberflächenstrukturen der zu beschichtenden Substrate eindringen und dadurch eine zusätzlich Verhinderung der Permiabilität (Durchlässigkeit) zwischen der Innenstruktur des GfK und des Wassers und somit die Verhinderung der Osmose bewirken.

Neben der Anwendung als Unterwasseranstrich von Schiffskörpern können die erfindungsgemäßen Beschichtungszusammensetzungen auch zur Beschichtung von Metalloberflächen wie Propellern, Wellen, Stevenrohren oder Rotoren von Windrädern genutzt werden. Aufgrund der hohen Haftfestigkeit, Abriebfestigkeit und der einstellbaren isolierenden Wirkung der aus den erfindungsgemäßen Beschichtungszusammensetzungen herstellbaren Beschichtungen ist es hierbei sogar denkbar, auf die zum Schutz von Aluminium im Unterwasserbereich eingesetzten Zink-Opferanoden zu verzichten.

Weitere Anwendungsgebiete für die erfindungsgemäßen Beschichtungszusammensetzungen sind beispielsweise Wohnmobile, Caravane, Autos oder Trailer, um die Alterung der Oberfläche zu stoppen oder zu verlangsamen. Darüber hinaus können auch wasserführende Systeme wie Tanks, Rohrleitungen oder Schläuche mit den erfindungsgemäßen Beschichtungszusammensetzungen beschichtet werden.

Durch die Anwendbarkeit der erfindungsgemäßen Beschichtungszusammensetzungen auf unterschiedlichsten Materialien und deren Ausgestaltbarkeit auch zur Herstellung transparenter Beschichtungen lassen sich die erfindungsgemäßen Beschichtungszusammensetzungen auch auf Holzoberflächen einsetzen und können zum Schutz von beispielsweise Teakholzmöbeln oder Holzaufbauten benutzt werden.

Die aus den erfindungsgemäßen Beschichtungszusammensetzungen hergestellten Beschichtungen oder die unter Anwendung des im Bereich der Erfindung liegenden Verfahrens hergestellten Beschichtungen zeigen eine gegenüber den aus dem Stand der Technik bekannten Beschichtungen deutlich verbesserte Haltbarkeit und Bewuchs- und Ablagerungsverhinderung. Hierdurch sind mit der Verwendung der erfindungsgemäßen Beschichtungszusammensetzungen und des erfindungsgemäßen Verfahrens große allgemeine ökologische und ökonomische Vorteile in der Limnologie verbunden.

Die nachfolgenden Ausführungsbeispiele stehen lediglich exemplarisch für die erfindungsgemäße Beschichtungszusammensetzung, welche sich nicht auf die Ausführungsbeispiele beschränken lässt.

### Beispiel 1

40 g einer Lösung bestehend aus Ethanol, Butanol und Isoparaffin im Verhältnis von 2:1:1 werden in einer Mischapparatur vorgelegt. Zu dieser Lösung werden 15 g Tetraetoxysilan, 5 g Phenyltrietoxysilan, 5 g Octyltrietoxysilan sowie 5 g eines Epoxidharzes, bevorzugt eines Bisphenol-A-Harzes zugegeben. Die Mischung wird unter Rühren und Ausschluss von Feuchtigkeit gekühlt. Zu der so erhaltenen Mischung werden 20 g 3-Aminopropyltrietoxysilan gegeben.

Die erhaltene Beschichtungszusammensetzung kann in üblicher Weise auf gereinigte Oberflächen appliziert werden und bildet nach dem Abtrocknen eine haftfeste, bewuchsverhindernde, leicht reinigbare Oberfläche.

### Beispiel 2

40 g der bereits in Beispiel 1 beschriebenen Alkohol/Paraffinmischung werden in einer Rührapparatur vorgelegt. Anschließend werden 15 g Tetraetoxysilan, 5 g Phenyltrietoxysilan, 5 g Octyltrietoxysilan, 15 g eines Epoxidharzes sowie 20 g 3-Aminopropyltrietoxysilan zugesetzt. Zu der so erhaltenen Mischung werden 10 % M-Octyl-Bernsteinsäureanhydrid gegeben.

Die so erhaltene Beschichtungszusammensetzung lässt sich in üblicher Weise applizieren.

### Beispiel 3

Zu der aus Beispiel 1 bekannten Beschichtungszusammensetzung werden 10 % eines Zinkoxids mit einer mittleren Korngröße < 30 - 100 nm unter Rühren zugesetzt. Die so erhaltene Beschichtungszusammensetzung lässt sich in üblicher Weise applizieren und bildet eine eine stärkere Bewuchsverhinderung zeigende Beschichtung aus.

### Beispiel 4

Zu der aus Beispiel 1 bekannten Beschichtungszusammensetzung werden 10 g eines 3-(Trietoxysilyl)Propylbernsteinsäureanhydrids gegeben.

Die erhaltene Beschichtungszusammensetzung lässt sich in der üblichen Weise applizieren und zeigt verbesserte anhaftungsverhindernde Eigenschaften.

### Beispiel 5

Zu einer aus Beispiel 1 bekannten Beschichtungszusammensetzung werden 10 g eines Polytetrafluorethylens zugegeben. Die erhaltene Mischung wird mit Hilfe einer Dispergierscheibe gerührt. Die erhaltene Beschichtungszusammensetzung zeigt eine extrem glatte Oberfläche mit sehr geringem Reibungswiderstand auf.

### Beispiel 6

Zu einer aus Beispiel 1 bekannten Beschichtungszusammensetzung werden 10 g Calciumperoxid zugesetzt. Die erhaltene Beschichtungszusammensetzung zeigt desinfizierende Oberflächeneigenschaften auf.

### Beispiel 7

Ein Montanwachs wird im Verhältnis von 2:1 bis 1:2 bei 90° C in Isoparaffin gelöst. Zu 20 g der so erhaltenen Mischung werden 80 g der aus Beispiel 1 bekannten Beschichtungszusammensetzung zugegeben. Die herstellbaren Beschichtungen zeigen glatte, berührungsunempfindliche Oberflächen.

### Beispiel 8

Zu einer aus Beispiel 1 bekannten Beschichtungszusammensetzung werden 5 g eines Silikonöls zugegeben. Die erhaltene Beschichtungszusammensetzung zeigt eine äußerst glatte Schmutz unempfindliche Oberfläche auf.

## Patentansprüche

1. Beschichtungszusammensetzung, insbesondere Antifouling-Beschichtungszusammensetzung für Wasserfahrzeuge, wenigstens aufweisend:
25 bis 60 Gew.%, bevorzugt 35 bis 45 Gew.% einer Lösung bestehend aus wenigstens einem Alkohol mit 1 bis 5 Kohlenstoffatomen sowie einem Paraffin oder Isoparaffin mit 5 bis 15 Kohlenstoffatomen;
2 bis 10 Gew. % eines Duroplasten, bevorzugt eines Epoxidharzes; sowie
5 bis 70 Gew.%, bevorzugt 30 bis 70 Gew.%, noch bevorzugter 50 bis 70 Gew.% wenigstens einer siliziumorganischen Verbindung der allgemeinen Formel 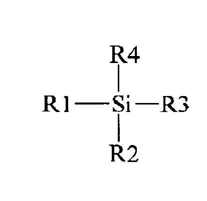 wobei R1, R2 und R3 gleiche oder verschiedene Alkyl- oder Alkoxygruppen mit 1 bis 5 Kohlenstoffatomen sind, und R4 eine substituierte oder unsubstituierte Aryl-, Amin-, Epoxigruppe, eine Perfluorgruppe mit bis zu 13 Fluoratomen, eine Ethergruppe mit 1 bis 5 Kohlenstoffatomen oder eine substituierte oder unsubstituierte Alkylgruppe mit 3 bis 9 Kohlenstoffatomen ist.

2. Beschichtungszusammensetzung nach Anspruch 1, aufweisend eine Verbindung der allgemeinen Formel 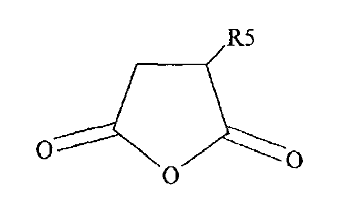 wobei R5 eine Alkylgruppe mit 4 bis 12 Kohlenstoffatomen, bevorzugt mit 6 bis 9 Kohlenstoffatomen oder ein Gruppe der allgemeinen Formel 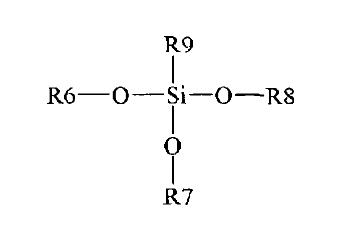 ist, wobei R6, R7, R8 und R9 gleiche oder verschieden Alkylgruppen mit 1 bis 5 Kohlenstoffatomen sind.

3. Beschichtungszusammensetzung nach Anspruch 2, wobei diese die Verbindung in einer Konzentration zwischen 5 und 20 Gew.%, bevorzugt zwischen 5 und 15 Gew.% aufweist.

4. Beschichtungszusammensetzung nach einem oder mehreren der vorangegangenen Ansprüche, aufweisend 5 bis 20 Gew.%, bevorzugt 5 bis 15 Gew.% eines Zinkoxids mit einer mittleren Korngroße < 30-100 nm.

5. Beschichtungszusammensetzung nach einem oder mehreren der vorangegangenen Ansprüche, aufweisend 5 bis 20 Gew.%, bevorzugt 5 bis 15 Gew. % eines Polytetrafluorethylens.

6. Beschichtungszusammensetzung nach einem oder mehreren der vorangegangenen Ansprüche, aufweisend 5 bis 20 Gew.%, bevorzugt 5 bis 15 Gew. % Calciumperoxid.

7. Beschichtungszusammensetzung nach einem oder mehreren der vorangegangenen Ansprüche, aufweisend 10 bis 30 Gew.%, bevorzugt 10 bis 25 Gew.% einer Mischung bestehend aus Montanwachs und C₅ bis C₁₅ Paraffin oder Isoparaffin.

8. Beschichtungszusammensetzung nach einem oder mehreren der vorangegangenen Ansprüche, aufweisend 2 bis 10 Gew.%, bevorzugt 2 bis 7 Gew.% eines Silkonöls.

9. Verfahren zur Beschichtung von mit Wasser in Kontakt stehenden Oberflächen, insbesondere von Oberflächen von Wasserfahrzeugen, aufweisend die Verfahrensschritte:
- Aufbringen einer Beschichtungszusammensetzung auf die zu beschichtende Oberfläche, wenigstens aufweisend:
25 bis 60 Gew.%, bevorzugt 35 bis 45 Gew.% einer Lösung bestehen aus wenigstens einem Alkohol 1 bis 5 Kohlenstoffatomen sowie einem Paraffin oder Isoparaffin mit 5 bis 15 Kohlenstoffatomen;
2 bis 10 Gew.% eines Duroplasten, bevorzugt eines Epoxidharzes; sowie 5 bis 70 Gew.%, bevorzugt 30 bis 70 Gew.%, noch bevorzugter 50 bis 70 Gew.% wenigstens einer siliziumorganischen Verbindung der allgemeinen Formel 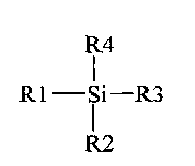
wobei R1, R2 und R3 gleiche oder verschiedene Alkyl- oder Alkoxygruppen mit 1 bis 5 Kohlenstoffatomen sind, und R4 eine substituierte oder unsubstituierte Aryl-, Amin-, Epoxigruppe, eine Perfluorgruppe mit bis zu 13 Fluoratomen, eine Ethergruppe mit 1 bis 5 Kohlenstoffatomen oder eine substituierte oder unsubstituierte Alkylgruppe mit 3 bis 9 Kohlenstoffatomen ist;
- Trockner der aufgebrachten Beschichtungszusammensetzung

10. Verfahren gemäß Anspruch 9, wobei vor einem endgültigen Trocknen der aufgebrachten Beschichtung auf diese ein Polyurethanpulver mit einer spezifischen Oberfläche >200 m²/g aufgebracht wird.

11. Verfahren gemäß Anspruch 10, wobei das Polyurethanpulver mittels elektrostatischer Pulverbeschichtungsverfahren auf die Beschichtung aufgebracht wird.
